Europäisches Patentamt

European Patent Office

Office européen des brevets

(11) Publication number: **0 053 610**
**B1**

(12) **EUROPEAN PATENT SPECIFICATION**

(45) Date of publication of patent specification: **17.07.85**

(51) Int. Cl.⁴: **B 29 D 30/10**

(21) Application number: **81900694.1**

(22) Date of filing: **16.06.80**

(86) International application number:
**PCT/US80/00771**

(87) International publication number:
**WO 81/03638 24.12.81 Gazette 81/30**

(54) **ROTATING CUTTER AND STITCHER FOR SEVERING MATERIAL FROM A BODY.**

| | |
|---|---|
| (43) Date of publication of application:<br>**16.06.82 Bulletin 82/24** | (73) Proprietor: **CATERPILLAR TRACTOR CO.**<br>**100 Northeast Adams Street**<br>**Peoria Illinois 61629 (US)** |
| (45) Publication of the grant of the patent:<br>**17.07.85 Bulletin 85/29** | (72) Inventor: **Satzler, Ronald L.**<br>**315 Sumner Drive**<br>**Princeville, IL 61559 (US)** |
| (84) Designated Contracting States:<br>**DE FR GB** | |
| (56) References cited:<br>**US-A-3 586 566**<br>**US-A-3 606 921**<br>**US-A-4 044 085**<br>**US-A-4 050 336** | (74) Representative: **Wagner, Karl H.**<br>**WAGNER & GEYER Patentanwälte**<br>**Gewuerzmuehlstrasse 5 Postfach 246**<br>**D-8000 München 22 (DE)** |

Courier Press, Leamington Spa, England.

## Description

Technical Field

This invention relates to an apparatus for applying and trimming a layer of material on a toroidal core and, more particularly, to a rotating cutter and stitcher therefor.

Background Art

In manufacturing toroidal bodies, such as a tube tire shown in the Grawey U.S. Patent 3,606,921, issued September 21, 1971 and assigned to the common assignee of the present application, a layer of material is laid on a portion of a sand core whereupon the edges of the layer are trimmed after which the edges of the layer are tacked to the core. Subsequent layers of material are laid on another portion of the core or on the previously laid layer to build up a tube of material for subsequent processing. One prior art apparatus for applying the material is shown in the Grawey U.S. Patent 4,044,085, issued August 23, 1977, entitled "Method for Forming a Tubre Article on a Core" and is assigned to the common assignee of the present application. The Grawey U.S. Patent 4,044,085 shows apparatus for vacuum forming a sheet of material on slightly more than one-half of the sand core, whereupon a pair of concentric knives are engaged with the sheet to sever the applied portion of the sheet from the scrap portion of the sheet. The cutting is performed by the knife edges being urged axially into contact with the sheet of material which is backed by a backing member to sever the material. Stitchers are then brought into contact with the severed edge of the material to stitch the severed edge to the core or to an underlying layer of material. Although the severing and stitching performed by the apparatus of the 4,044,085 patent has been successful, it has been found that the blades require frequent sharpening. The apparatus also requires extra movements to sever and then to stitch the material, thereby resulting in slower production time.

In another type of apparatus, such as shown in the Van Vleet et al U.S. Patent 3,586,566, issued June 22, 1971, entitled "Process of Encapsulating an O-Ring", a toroidal core is formed on the end of a cylindrical wall and is partially encircled with the sheet of material whereupon cutters sever the material by shearing across an opening from which the material extends. The cutters of the 3,586,566 patent are actually intended to score into the junction betwen the cylindrical wall and the core about which the rubber material is being formed. The scoring of the core would be unacceptable to a tube for a tire or the like.

In building the elastomeric tube, or the like, it is important not only that the core not be damaged as by scoring, but also that underlying layers of material not be severed or scored as the various layers are applied to the core. Scoring the core or the underlying layers of material may cause an unevenness that will carry over into the surface of the finished tire which may create problems.

The present invention is directed to overcoming one or more of the problems as set forth above.

Disclosure of Invention

In accordance with one aspect of the present invention a cutting and stitching apparatus is provided for cutting and stitching an applied portion of a sheet of elastomeric material to a toroidal core. The apparatus includes a rotatable carrier plate support at least one cutter and at least one stitcher positioned outboard of the outside diameter of the core and inboard of the inside diameter of the core. The cutter has a rotatably driven blade and the sticher has a freely rotatable roller. The apparatus includes actuator means carried by said plate for moving the cutter and stitcher forward and away from said core and means for advancing and retracting the rotatably driven blade of the cutter in a tangential direction. A means for rotating the blade of the cutter is also provided.

In the construction of an elastomeric tube by the method of building up multiple layers of sheet material on a core, it has heretofore been the practice to trim excess sheet material by axially urging an annular blade or cutter into contact with the sheet materal and pressure the blade through the sheet material. It has been found that the nonrotating blades on this type of apparatus not only require frequent sharpening but also must be moved away from the severed edge prior to stitching the edge to underlying layers (US—A—4044085).

The present invention overcomes the problems of the prior art by providing a combined cutting and stitching apparatus which is programmed to move into position on diametrically opposite locations on the outside diameter of the core and on diametrically opposite locations on the inside diameter of the core to sever a vacuum formed sheet of material along a tangent to the cross section of the core. The severing cutters are rotatably driven with the stitching rollers acting as gauge wheels as the apparatus is rotated about the core. The cutters are retracted and pressure between the stitchers and the edge of the material is continued so that the stitchers will further stitch the severed edges of the material to the core or to an underlying layer of material. The tangential direction of cut of the rotating cutters avoids scoring or cutting the core or an underlying layer of material.

A second aspect of the invention according to which the cutting and stitching apparatus is part of a vacuum-forming mechanism, is specified in claim 10.

The improved cutting and stitching apparatus can be moved into position for cutting and stitching, and can be retracted out of position so as not to interfere with the other operations being performed on the core.

Brief Description of Drawings

Fig. 1 is a plan view of an embodiment of the present invention with parts broken away;

Fig. 2 is an enlarged, partial elevational view taken along the line 2—2 of Fig. 1, showing one outside cutting and stitching apparatus and one inside cutting and stitching apparatus with the remaining two cutting and stitching apparatuses of Fig. 1 removed;

Fig. 3A is an enlarged view of a mounting element for one inside cutting and stitching apparatus of Fig. 2;

Fig. 3B is a cross-sectional view taken along the line 3B—3B of Fig. 3A;

Fig. 4 is an enlarged, elevational view of a preferred form of cutting and stitching apparatus;

Fig. 5 is a view taken along the line 5—5 of Fig. 4;

Fig. 6 is a view taken along the line 6—6 of Fig. 4;

Fig. 7A is an enlarged view of a mounting element for one outside cutting and stitching apparatus of Fig. 2;

Fig. 7B is a fragmentary broken away view taken along the line 7B—7B of Fig. 7A;

Fig. 8 is a somewhat schematic elevational view of a core in a vacuum chamber prior to vacuum forming the material on the surface of the core and with the cutting and stitching apparatus in the raised and inactive position;

Fig. 9 is a view similar to Fig. 8 only with the core raised and the sheet of material vacuum formed over a portion thereof;

Fig. 10 is an enlarged broken away view showing one exterior cutting and stitching apparatus in position with the cutter severing the applied material from the sheet;

Fig. 11 is an enlarged broken away view showing one interior cutting and stitching apparatus in position with the cutter severing the applied material from the sheet; and

Fig. 12 is an enlarged broken away view similar to Fig. 10 only with the cutter retracted and the stitchers stitching the applied material to the core.

Best Mode for Carrying Out the Invention

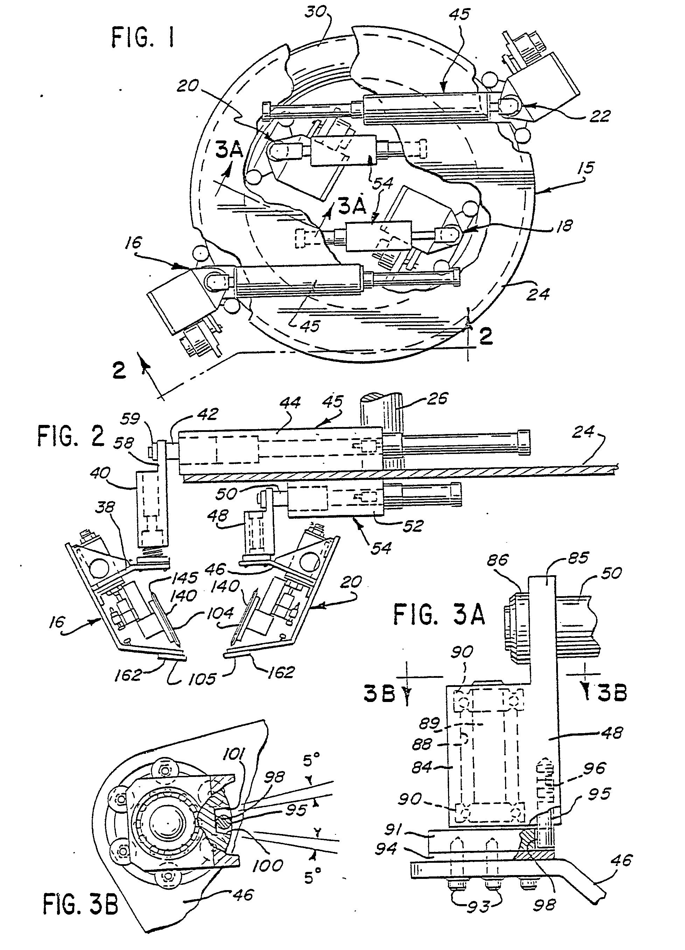

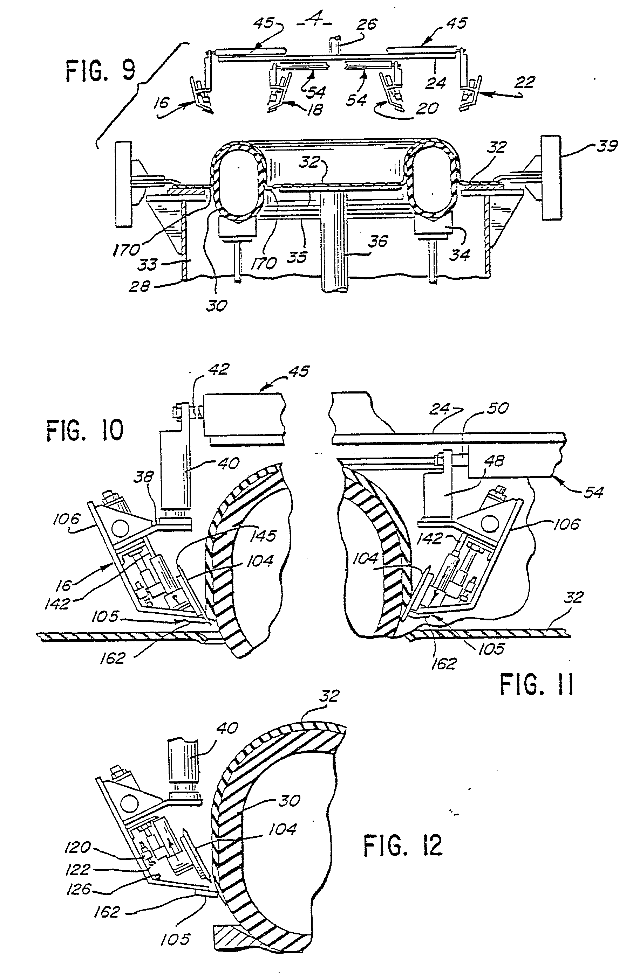

Referring to Figs. 1 and 2, there is shown a trimming and stitching machine 15 which comprises four cutting and stitching apparatuses 16, 18, 20 and 22, all carried by an annular carrier plate 24. A shaft 26 is centrally mounted on the annular carrier plate 24 and is rotatably driven (not shown) for rotating the carrier plate 24 in the plane of the plate. Said shaft 26 is also vertically movable so as to raise and lower said plate 24 (see Fig. 8) relative to a vacuum container 28 in which is positioned a vertically movable toroidal sand core 30. The details for spreading a sheet of elastomeric material 32 (as shown in Figs. 8 and 9) over the open top of the vacuum container 28, raising the vacuum container 28 to seal the sheet of material 32 and container 28 against a fixed ring seal 39, together with the details of the structure for drawing a vacuum in the chamber 33 of the container 28 and for raising a platform 34 and core 30 so as to vacuum form the sheet of elastomeric material 32 over a portion of the surface of the core 30, are conventional. A typical operative structure for accomplishing the vacuum forming is shown and described in the above referred to U.S. Patent 4,044,085.

Referring again to Figs. 1 and 2, the outside cutting and stitching apparatuses 16 and 22 are carried by the carrier plate 24 for cutting and stitching the elastomeric sheet material 32 on the outside diameter of the core 30. The horizontal axial centerlines for the apparatuses 16 and 22 lie on the same common diameter. Likewise, inside cutting and stitching apparatuses 18 and 20 are carried by the carrier plate 24 for cutting and stitching the material 32 on the inside diameter of the core 30, the centerlines for the apparatuses 18 and 20 lie along the same common diameter. Outside cutting and stitching apparatuses 16 and 22 are each carried by a bracket 38 attached to a mounting element 40 affixed to the outer end of a rod 42 which is axially movable from a cylinder 44 of a fluid motor 45 mounted on the upper surface of the carrier plate 24. Inside cutting and stitching apparatuses 18 and 20 are each carried by a bracket 46 attached to a mounting element 48 affixed to the outer end of a rod 50 which is axially movable from a cylinder 52 of a fluid motor 54 mounted on the lower surface of the carrier plate 24. The fluid motors 45 and 54 are attached to the carrier plate 24 and are connected by fluid conducting lines to a source of pressure with valves and controls, not shown, located in the lines and actuated in response to a signal from a programmed computer such that the valves admit or exhaust fluid from the cylinders 44, 52 to move the rods 42, 50 and the cutting and stitching apparatuses 16, 22, 18, 20 toward or away from the sheet of material 32 draped over the core 30.

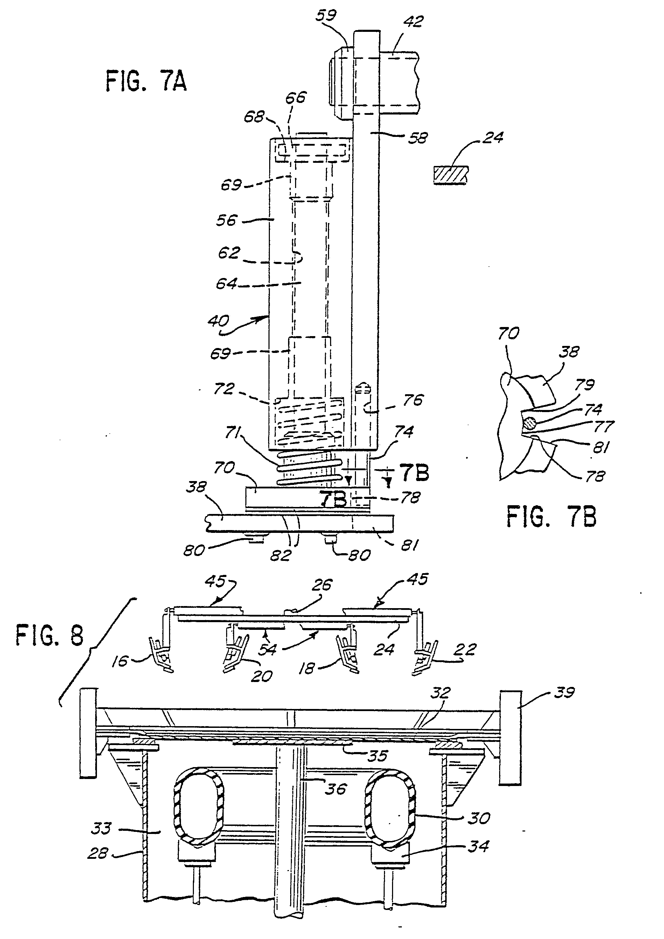

More specifically, the mounting element 40 for the outside apparatuses 16, 22, as shown in Figs. 2 and 7A, is comprised of a housing 56 which has an axially extended wall 58 fixed on the end of the rod 42 by a nut 59, or the like. The housing 56, which is somewhat rectangular in cross section, extends beyond the edge of the carrier plate 24 and has an axially extending opening 62 through which a pivot pin 64 extends. A collar 66 is secured on the end portion of the pivot pin 64, which collar 66 seats in a recess 68 in the end of the housing 56. The pin 64 is radially supported by bearings 69 and has the lower end portion projecting beyond the housing 56 and being attached to a plate 70. A compression spring 71 encircles the pin 64 and bears, at one end, against the plate 70 and, at the other end, against a shoulder 72 in the housing 56. A limit pin 74 (Fig. 7B) is anchored in an opening 76 lying parallel to the pin 64, with the pin 74 projecting downward from the housing 56 and into a cutout 77 in plate 70. The cutout 77 has spaced end walls 78, 79. The bracket 38 has a cutout 81 which is aligned with cutout 77 so that when the spring 71 is compressed, the pin 74 projects into the cutouts 81 and 77 to limit the amount of rotation of the outside apparatuses 16, 22 relative to the mounting element 40. The plate 70 is bolted by bolts 80 to the bracket 38 with an appropriate number of shims or spacers 82 positioned between the bracket 38 and the plate 70. The shims 82 are used to locate the cutting and stitching apparatus at the desired height relative to the desired cutting plane of the sheet 32 on the core 30 as will be described more in detail hereinafter.

The mounting element 48 for the inside apparatuses 18, 20, and as shown in Figs. 2, 3A and 3B, is comprised of a housing 84 which has an axially extended wall 85 fixed on the end of the rod 50 of the fluid motor 54 by a nut 86, or the like. The housing 84 is somewhat rectangular in cross section (see Fig. 3B) and has an axially extending opening 88 through which a pivot 89 extends. Ball bearing assemblies 90 rotatably position the pivot 89 in the housing 84 with one end portion projecting beyond the housing 84 and being secured to a plate 91. The plate 91 is bolted by bolts 93 to the bracket 46 with shims or spacers 94 therebetween. The shims or spacers 94 are used to properly position the height of the cutting and stitching apparatuses 18 and 20, the reason for which will be described hereinafter. A limit pin 95 is anchored in an opening 96 in the housing 84 and projects downwardly from the housing 84 and into a cutout 98 in the plate 91. The cutout 98 has spaced apart end walls 100, 101 which permits the pin 95 and housing 84 to rotate about the pivot 89 a limited amount. As shown, the bracket 46 can rotate 10° relative to the housing 84.

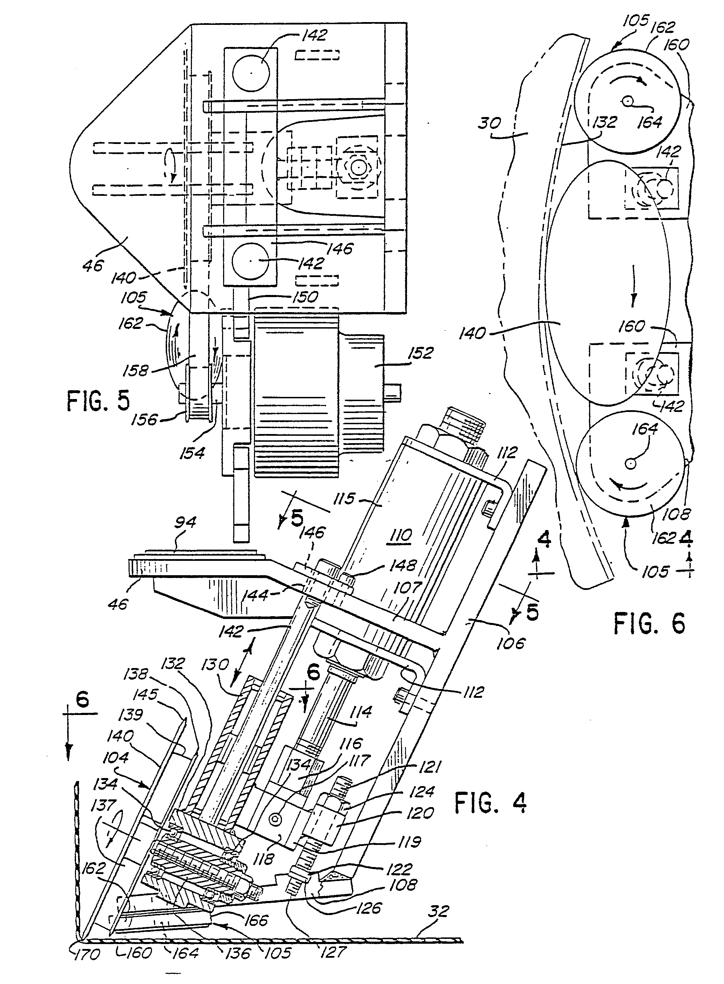

Mounted on each of the two brackets 38 and on each of the two brackets 46, is a cutter 104 and a stitcher 105 with each cutter 104 and each stitcher 105 being substantially the same and operating in the same fashion. Only one cutter 104 and one stitcher 105, as shown in Figs. 4, 5 and 6, will be described in detail. Fig. 4 illustrates one inside cutting and stitching apparatus 18 mounted on the bracket 46 carried by the housing 84 of the mounting element 48 on the rod 50 of the fluid motor 54. A back plate 106 is welded at a right angle to a downwardly angled portion 107 of the bracket 46. A foot plate 108 is welded to the back plate 106 and projects in the same direction as the bracket 46 in spaced relation to said bracket 46. A fluid motor 110 is mounted to said back plate 106 by a pair of spaced apart straps 112 and has a rod 114 movable into and out of a cylinder 115 of said motor. A clevis 116 is threaded on the rod 114 and is pinned by pin 117 to a cross member 118, one end 119 of which is secured, as by welding or the like, to a threaded sleeve 120. An adjusting bolt 121 is threaded through sleeve 120 and has a pad 122 on the distal end thereof. A nut 124 on the bolt 121 bears against the sleeve 120 to lock the bolt 121 in position with respect to the sleeve 120. A stop 126 is mounted on a member 127 threaded into the foot plate 108 and is aligned with the pad 122.

The cross member 118 has a housing 130 welded, or the like, thereto at the midportion thereof. The housing 130 has a bearing mount 132 welded to the lower midportion thereof with a pair of spaced bearings 134 rotatably supporting an axle 136 extending at right angles to the housing 130. A pulley 137 is fixed to the axle 136 and has a flange 138 on one edge of the surface 139 thereof with a circular cutting blade 140 affixed to the pulley 137 and extending radially outward beyond the surface of the pulley 137 in spaced relation to said flange 138. A pair of spaced apart slide bars 142 are secured to the bearing mount 132 and extend through seals in the housing 130 and through bushings 144 in a plate 146 secured as by bolts 148 to the bracket 46. The fluid motor 110 is connected to a source of fluid through valves (not shown) which are controlled by signals from a pre-programmed computer (not shown) which will retract the rod 114 into the cylinder 115, moving the housing 130 with the cutting blade 140 toward the bracket 46. The slide bars 142 slide in the bushings 144 to guide the movement of the cutter 140 toward and away from a cutting position. The pad 122 on the adjusting bolt 121 contacts the pad on the stop 126 to position the cutting edge 145 of the blade 140 in the proper cutting position.

A mounting member 150 is secured to one side of the housing 130 and supports a drive motor 152, a shaft 154 and a drive pulley 156. A belt 158 connects the drive pulley 156 to the pulley 137 so that actuation of the motor 152 will rotate the cutting blade 140.

The stitchers 105 are mounted on the spaced, bifurcated end portions 160 (Fig. 6) of the foot plate 108. Each stitcher 105 is comprised of a roller 162 freely rotatable about a pivot 164 affixed to said portions 160. The contact face 166 of the roller 162 is angled slightly with respect to the sides of the pulley so that the contact face 166 will lie in the plane of the sheet of material 32 and parallel to the side wall of the core 30 when it is moved into contact therewith for stitching.

The rollers 162 serve both as stitchers and as horizontal gauge wheels for the cutter blade 140 and, as shown in Fig. 6, are in contact with the wall of core 30 when the cutter blade 140 is cutting the sheet of material 32. As shown in Fig. 4, the roller 162 illustrated is the remote roller 162 of Fig. 6 and, although it appears to be spaced rearward of the core 30, it is, in fact, in contact with the core 30 and is gauging the cut of the cutter 140.

Industrial Applicability

As shown somewhat schematically in Figs. 8 and 9, the vacuum container 28 has a core 30 therein on a platform 34. A sheet of elastomeric material 32 is laid across the opening in the container 28 and is supported in the midportion on a fixed circular table 35 carried by a pillar 36. The material 32, container 28 and table 35 are raised to engage the material against the seal ring 39 to effect a seal between the material 32 and the container 28. At a predetermined signal from the computer controls, the platform 34 will raise the core 30 from the position of Fig. 8 to the position of Fig. 9 as a vacuum is drawn in the chamber 33. The vacuum will draw the material 32 around the one side of the core 30 to a desired position, such as just beyond the mid-circumferential plane of the core. A small indented bead 170 is formed at the junction of the material 32 and the core 30.

The computer controls will activate the power to lower the shaft 26, carrier plate 24 and cutting and stitching apparatuses 16, 18, 20, 22 to a position with the foot plate 108 just above the desired cutting plane for the material 32. The computer controls will now actuate the fluid motors 45, 54 to move the cutters 104 and stitchers 105 into a position with the rollers 162 contacting the material ahead and behind the cutter blades 140. The computer control will then activate the fluid motors 110 to move the cutting blade 140 toward the bead 170 in the material 32 and to energize the motor 152 to start rotating the cutting blade 140 about its axis. The advance of the cutting blade 140 is arrested when the pad 122 contacts the stop 126 at which point the plane of the cutting blade 140 is parallel to the core 30 so that the edge 145 of the rotating blade 140 will slice through the material 32 as the shaft 26 rotates the plate 24 and cutting and stiching apparatuses 16, 18, 20, 22 traverse the core 30 (Figs. 10 and 11) until the material applied to the core 30 is separated from the material around the outer edge and around the center portion of the sheet. The angle of the plane of the blade to the core is such that the cutting blade 140 will not contact or cut either the core 30 or a layer of material previously stitched to the core. Using the four apparatuses shown will require only a 180° rotation of the plate with the cutting blades 140 in cutting position. However, in practice, the plate has been rotated a full 360° to produce a clean cut and to permit the rollers 162 to initially stitch the newly cut edge of the sheet of material 32 to the core 30. As soon as the applied portion of the material is severed from the sheet, the cutters 104 are retracted and the rotation of the blades 140 is stopped. The plate 24 continues to rotate another 360° with only the rollers 162 (stitchers 105) in contact with the newly cut or severed edge of the material to further stitch the edges to the core 30 or to the previously laid up layer of material. The fluid motors 45, 54 are programmed to apply the rollers 162 of the stitchers 105 against the severed edge of the material with a predetermined amount of force. During the cutting and stitching of the material, the outside apparatuses 16, 22, being diametrically opposite each other, apply force toward each other on the outside of the core 30 at the same time the inside apparatuses 18, 20 apply force diametrically opposite each other outwardly. After the rollers 162 of the stitchers 105 have circled the core 30 in contact with the cut edge of material the requisite number of times, the controls move the outside apparatuses 16, 22 outwardly and the inside apparatuses 18, 20 inwardly, out of contact with the now stitched edges of the material on the core 30 and at a predetermined point the shaft 26 raises the plate 24 and apparatuses 16, 18, 20, 22 to the at rest raised position, such as shown in Fig. 8.

In the event only one outside and one inside cutting and stitching apparatus is used, the apparatuses will have to be rotated at least a full 360° to sever the applied material from the sheet of material, and the stitching step would require additional rotations of the plate.

The stitching rollers 162 of stitchers 105 are used as gauging rollers by being adjusted to contact the material on either side of the cutting blade 140 as the cutter is cutting the material.

To adjust the plane of cut and stitch, shims 82 and 94 can be added or subtracted from between the housings 56 and 84, respectively, to lower or raise the plane of the cut and stitch. The pins 74 and 95 in the cutouts 77 and 98 permit the cutting and stitching apparatuses 16, 18, 20, 22 to adjust a few degrees either side of center to self-adjust to the correct alignment with the core 30 as it is brought into contact therewith. The outside apparatuses 16, 22 are vertically spring cushioned relative to the housings 56 to allow for certain misalignments. Normally the spring 71 is in a neutral condition holding the attached apparatuses 16, 22 at the desired height.

**Claims**

1. A cutting and stitching apparatus (16, 18, 20, 22) for cutting and stitching an applied portion of a sheet of elastomeric material (32) to a toroidal core (30), said cutting and stitching apparatus characterized by:
   a rotatable carrier plate (24),
   at least two cutter means (104) supported by said plate (24) having a rotatably driven blade (140), one of said cutter means (104) being positioned outboard of the outside diameter of said core (30) and the other of said cutter means (104) being positioned inboard of the inside diameter of said core (30),
   at least two stitcher means (105) supported by said plate (24) having a freely rotatable roller (162), one of said stitcher means (105) being positioned outboard of the outside diameter of said core (30) and the other of said stitcher means (105) being positioned inboard of the inside diameter of said core (30),
   actuator means (45, 54) carried by said plate (24) for moving said cutter means (104) and stitcher means (105) toward and away from said core (30);
   means (110) for advancing and retracting said rotatably driven blade (140) of said cutter means (104) in a tangential direction with respect to the core surface;
   means (152) for rotating said blade (140).

2. In an apparatus as set forth in claim 1 including means (26) for raising and lowering said carrier plate (24).

3. In an apparatus as set forth in claim 1 wherein said actuator means (45, 54) simultaneously moves said respective cutter means (104) and stitcher means (105) into a predetermined relationship with opposite sides of said core (30).

4. In an apparatus as set forth in claim 3 wherein at least four cutter means (104) and at least four stitcher means (105) are carried by said plate (24), two of said cutters (104) and two of said stitchers (105) being movable into and out of operative relationship with the outside periphery of said core (30) along a common diameter thereof, and the remaining two of said cutters (104) and stitchers (105) being movable into and out of operative relationship with the inside surface of said core (30) along a common diameter thereof.

5. In an apparatus as set forth in claim 1 wherein said actuator means (45, 54) is a fluid motor (45, 54) having a cylinder (44, 52) with an axially extendible rod (42, 50).

6. In an apparatus as set forth in claim 4 including a mounting element (40, 48) and a bracket (38, 46) are suspended from said rod (42, 50), and wherein said means (110) for moving said blade (140) is carried by said bracket (38, 46) said means (110) including a fluid motor (110) having a cylinder (115) with an axially extendible rod (114), a slide (142) mounted parallel to said rod (114), a bearing mount (132) connected to said rod (115) and said slide (142).

7. In an apparatus as set forth in claim 6 wherein said roller (162) of said stitcher is mounted on said bracket (38, 46), and said fluid motor (45, 54) moves said roller (162) into stitching contact with the severed edge of the sheet of material (32).

8. In an apparatus as set forth in claim 6 including shims (82, 94) disposed between the bracket (38, 46) and said mounting element (40, 48) and being of a construction sufficient for locating a cutting edge (145) of the blade (140) in a desired cutting plane.

9. In an apparatus as set forth in claim 6 including a pin (74, 95) projects downward from said mounting element (40, 48) into a slot (77, 98) in said bracket (38, 46).

10. In a vacuum-forming mechanism for applying a layer of elastomeric sheet material (32) to one side of a toroidal core (30), said mechanism comprising a vacuum container (28) having said core (30) positioned therein, said container (28) and said core (30) being axially movable relative to each other to move said core (30) from a position within said container (28) to a position partially raised above the open end of said container (28), means (39) for fastening said sheet of elastomeric material (32) over the open end of said container (28) when said core (30) is in position within said container (28), means for drawing a vacuum in said container (28) as said core (30) is moved to said position partially raised above the open end of said container (28) whereby a portion of said sheet of material (32) will be applied to one side of said core (30), in combination:

a cutting and stitching apparatus (16, 18, 20, 22) for cutting and stitching said applied portion of said sheet of material to said core (30), said cutting and stitching apparatus characterized by:

a rotatable carrier plate (24),

at least two cutter means (104) supported by said carrier plate (24) having a rotatably driven blade (140),

at least two stitcher means (105) carried by said carrier plate (24) having a freely rotatable roller (162),

actuator means (45, 54) carried by said carrier plate (24) wherein one of said actuator means (45) moves one of said cutters (104) and one of said stitchers (105) and a separate actuator means (54) moves the other one of said cutters (104) and the other one of said stitchers (105), said one actuator means (45) moving said respectively supported cutter (104) and stitcher (105) toward and away from an outside diameter of the core (30), said other actuator means (54) moving said respectively supported cutter (104) and stitcher (105) toward and away from an inside diameter of said core (30),

means (26) for raising and lowering said carrier plate (24) and said cutting and stitching apparatus (16, 18, 20, 22) relative to said core (30) and relative to said vacuum container (28),

means (110) for advancing and retracting the rotatably driven blade (140) of said cutter (104) toward said junction between the applied portion of the sheet of material (32) and the remainder of said sheet, the plane of said blade (140) lying in a direction parallel with said core (30), and said rotatably driven blade (140) slicing through said junction of the sheet of material (32) in response to said cutter (104) being advanced and said carrier plate (24) being rotated about the axis of said core (30);

said actuator means (45, 54) moving said stitcher (105) into stitching contact with said severed edge of said applied portion of the sheet of material (32) in response to said cutter (104) being retracted and said carrier plate (24) being rotated to rotate said stitcher (105) about said core (30).

11. A vacuum-forming mechanism as set forth in claim 10, wherein said actuator means (45, 45, 54, 54) includes four fluid motors each of said fluid motor (45, 45, 54, 54) supporting one of said cutters (104) and one of said stitchers (105), the first two of said fluid motors (45, 45) supporting said cutters (104) and said stitchers (105) for movement toward and away from an outside diameter of said core (30) along a common diameter of said core (30), the other two of said fluid motors (54, 54) supporting said cutters (104) and said stitchers (105) for movement toward and away from an inside diameter of said core (30) along a common diameter of said core (30).

**Patentansprüche**

1. Schneid- und Heftvorrichtung (16, 18, 20, 22) zum Schneiden und Heften eines aufgebrachten Teils eines Flächenelements aus elastomeren Material (32) auf einem Toroid-Kern (30) gekennzeichnet durch:

eine drehbare Tragplatte (24),

mindestens zwei Schneidmittel (104) getragen von der Platte (24) mit einer drehbar angetriebenen Klinge (140), wobei eines der Schneidmittel (104) außerhalb des Außendurchmessers des Kerns (30) positioniert ist, und wobei das andere der Schneidmittel (104) innerhalb des Innendurchmessers des Kerns (30) positioniert ist,

mindestens zwei Heftmittel (105) getragen von der Platte (24) mit einer frei drehbaren Rolle (162), wobei eines der Heftmittel (105) außerhalb des Außendurchmessers des Kerns (30) positioniert ist, und wobei das andere der Heftmittel (105) innerhalb des Innendurchmessers des Kerns (30) positioniert ist, Betätigungsmittel (45, 54) getragen von der Platte (24) zur Bewegung der Schneidmittel (104) und der Heftmittel (105) zum Kern (30) hin und weg von diesem;

Mittel (110) zum Vorschub und zum Zurückholen der drehbar angetriebenen Klinge (140) der Schneidmittel (104) in einer tangentialen Richtung bezüglich der Kernoberfläche;

Mittel (152) zum Drehen der Klinge (140).

2. Vorrichtung nach Anspruch 1, mit Mitteln (26) zum Anheben und Absenken der Tragplatte (24).

3. Vorrichtung nach Anspruch 1, wobei die Betätigungsmittel (45, 54) gleichzeitig die entsprechenden Scheidmittel (104) und Heftmittel (105) in eine vorbestimmte Beziehung mit entgegengesetzten Seiten des Kerns (30) bewegen.

4. Vorrichtung nach Anspruch 3, wobei mindestens vier Schneidmittel (104) und mindestens 4 Heftmittel (105) von der Platte (24) getragen werden, wobei zwei der Schneidmittel (104) und zwei der Heftmittel (105) in und außer Betriebsbeziehung mit dem Außenumfang des Kerns (30) bewegbar sind, und zwar längs eines gemeinsamen Durchmessers davon, und wobei die verbleibenden zwei der Schneidmittel (104) und Heftmittel (105) in und außer Betriebsbeziehung bezüglich der Innenoberfläche des Kerns (30) bewegbar sind, und zwar längs eines gemeinsamen Durchmessers davon.

5. Vorrichtung nach Anspruch 1, wobei die Betätigungsmittel (45, 54) ein Strömungsmittelmotor (45, 54) sind, der einen Zylinder (44, 52) mit einer axial ausfahrbaren Stange (42, 50) aufweist.

6. Vorrichtung nach Anspruch 4, mit einem Befestigungselement (40, 48) und einem Bügel (38, 46) hängend an der Stange (42, 50), wobei die Mittel (110) zur Bewegung der Klinge (140) von dem Bügel (38, 46) getragen sind, und wobei die Mittel (110) einen Strömungsmittelmotor (110) aufweisen, mit einem Zylinder (115) mit einer axial ausfahrbaren Stange (114), einem Gleitelement (142) angeordnet parallel zur Stange (114), einer Lagerhalterung (132) verbunden mit der Stange (115) und dem Gleitelement (142).

7. Vorrichtung nach Anspruch 6, wobei die Rolle (162) der Heftmittel auf dem Bügel (38, 46) angeordnet ist, und wobei der Strömungsmittelmotor (45, 54) die Rolle (162) in Heftkontakt mit der abgetrennten Kante des Flächenmaterials (32) bewegt.

8. Vorrichtung nach Anspruch 6, mit Abstandselementen (82, 94) angeordnet zwischen dem Bügel (38, 46) und dem Befestigungselement (40, 48) und zwar von hinreichender Konstruktion zur Anordnung einer Schneidkante (145) der Klinge (140) in einer gewünschten Schneidebene.

9. Vorrichtung nach Anspruch 6, mit einem Stift (74, 95) der von dem Befestigungselement (40, 48) nach unten in einen Schlitz (77, 98) in dem Bügel (38, 46) ragt.

10. In einer Vakuum-Form-Vorrichtung zum Aufbringen einer Lage eines elastomeren Flächenmaterials (32) auf eine Seite eines toroid förmigen Karns (30), wobei folgendes vorgesehen ist:

ein Vakuum-Behälter (28) mit dem Kern (30) darinnen positioniert,

wobei der Behälter (28) und der Kern (30) axial bezüglich einander beweglich sind, um den Kern (30) aus einer Position innerhalb des Behälters (28) in einer Position teilweise angehoben oberhalb des offenen Endes des Behälters (28) zu bewegen,

Mittel (39) zur Befestigung des Flächenelements aus elastomeren Material (32) über dem offenen Ende des Behälters (28) während der Kern (30) sich in der Position innerhalb des Behälters (28) befindet,

Mittel, um ein Vakuum im Behälter (28) zu erzeugen, wenn der Kern (30) in die erwähnte Position teilweise angehoben oberhalb des offenen Endes des Behälters (28) bewegt wird, wodurch ein Teil des Flächenelements aus Material (32) auf die eine Seite des Kerns (30) aufgebracht wird, wobei in Kombination folgendes vorgesehen ist:

eine Schneid- und Heftvorrichtung (16, 18, 20, 22) zum Schneiden und Heften des aufgebrachten Teils des Flächenelements aus Material an dem Kern (30) wobei die Schneid- und Heftvorrichtung gekennzeichnet ist durch:

eine drehbare Tragplatte (24),

mindestens zwei Schneidmittel (104) getragen von der Tragplatte (24) mit einer drehbar angetriebenen Klinge (140), mindestens zwei Heftmittel (105) getragen von der Tragplatte (24) mit einer frei drehbaren Rolle (162),

Betätigungsmittel (45, 54) getragen von der Tragplatte (24) wobei eines der Betätigungsmittel (45) eines der Schneidmittel (104) und eines der Heftmittel (105) bewegt, und wobei gesonderte Betätigungsmittel (54) das andere der Schneidmittel (104) und das andere der Heftmittel (105) bewegen, und wobei die einen Betätigungsmittel (45) die jeweils gehalterten Schneidmittel (104), bzw. Heftmittel (105) zu einem Außendurchmesser des Kerns (30) hin und von diesem wegbewegen, und wobei die anderen Betätigungsmittel (54) die jeweils getragenen Schneidmittel (104) bzw. Heftmittel (105) zu einem Innendurchmesser des Kerns (30) hin und von diesem weg bewegen, Mittel (26) zum Anheben und Absenken der Tragplatte (24) und der Schneid- und Heftvorrichtung (16, 18, 20, 22) bezüglich des Kerns (30) und bezüglich des Vakuumbehälters (28),

Mittel (110) zum Vorschub und zum Zurückholen der drehbar angetriebenen Klinge (140) der Schneidmittel (104) zu der Verbindung zwischen dem aufgebrachten Teil des Flächenelements des Materials (32) und dem Rest des Flächenelements, wobei die Ebene der Klinge (140) in einer Richtung parallel mit dem Kern (30) liegt, und wobei die drehmäßig angetriebene Klinge (140) durch die Verbindung des Flächenelements aus Material (32) schneidet, und zwar in Folge der Vorschubs der Schneidmittel (104) und der Drehung der Tragplatte (24) um die Achse des Kerns (30),

wobei die Betätigungsmittel (45, 54) die Heftmittel (105) in Heftkontakt mit der abgetrennten Kante des aufgebrachten Teils des Flächenelements aus Material (32) bewegen, und zwar in Folge der Zurückholung der Schneidmittel (104), wobei die Trägerplatte (24) verdreht wird, um die Heftmittel (105) um den Kern (30) zu drehen.

11. Eine Vakuum-Form-Vorrichtung nach Anspruch 10, wobei die Betätigungsmittel (45, 45, 54, 54) vier Strömungsmittelmotoren umfassen, wobei jeder Strömungsmittelmotor (45, 45, 54, 54) eines der Schneidmittel (104) und eines der Heftmittel (105) trägt, wobei die ersten zwei der Strömungsmittelmotoren (45, 45) die Schneidmittel (104) und die Heftmittel (105) unterstützen, und zwar für eine Bewegung zu einem Außendurchmesser des Kerns (30) hin und von diesem weg und zwar längs eines gemeinsamen Durchmessers des Kerns (30), und wobei die beiden anderen der Strömungsmittelmotoren (54, 54) die Schneidmittel (104) und die Heftmittel (105) unterstützen bei der Bewegung zu einem Innendurchmesser des Kerns (30) hin und von diesem weg und zwar längs eines gemeinsamen Durchmessers des Kerns (30).

**Revendications**

1. Appareil de coupe et de molettage (16, 18, 20, 22) pour couper et moletter une partie d'une feuille en un matériau élastomère (32) appliquée sur un mandrin toroidal (30), ledit appareil de coupe et de molettage étant caractérisé par:
— une plaque de support rotative (24),
— au moins deux moyens de coupe (104) supportés par ladite plaque (24) comportant une lame rotative (140) entraînée, un premier desdits moyens de coupe (104) étant disposé en dehors du diamètre extérieur dudit mandrin (30) et le second desdits moyens de coupe (104) étant disposé à l'intérieur du diamètre intérieur dudit mandrin (30),
— au moins deux moyens de molettage (105) supportés par ladite plaque (24) comportant une roulette (162) apte à tourner librement, un premier desdits moyens de molettage (105) étant disposé en dehors du diamètre extérieur dudit mandrin (30) et le second desdits moyens de molettage (105) étant disposés à l'intérieur du diamètre intérieur dudit mandrin (30),
— un moyen actionneur (45, 54) porté par ladite plaque (24) pour rapprocher et éloigner dudit mandrin (30) lesdits moyens de coupe (104) et moyens de molettage (105);

— un moyen (110) pour faire avancer et pour rétracter ladite lame rotative (140) entraînée dudit moyen de coupe (104) dans une direction tangentielle par rapport à la surface du mandrin;
— un moyen (152) pour faire tourner ladite lame (140).

2. Appareil selon la revendication 1, comprenant un moyen (26) pour relever et abaisser ladite plaque de support (24).

3. Appareil selon la revendication 1, dans lequel ledit moyen actionneur (45, 54) amène simultanément lesdits moyens respectifs de coupe (104) et de molettage (105) dans une relation prédéterminée par rapport aux côtés opposés dudit mandrin (30).

4. Appareil selon la revendication 3, dans lequelle au moins quatre moyens de coupe (104) et au moins quatre moyens de molettage (105) sont portés par ladite plaque (24), deux desdits couteaux (104) et deux desdites molettes (105) étant aptes à être amenés dans et hors d'une relation de coopération avec la périphérie externe dudit mandrin (30) le long d'un diamètre commun de ce dernier, et les deux autres desdits couteaux (104) et desdites molettes (105) étant aptes à être amenés dans et hors d'une relation de coopération avec la surface interne dudit mandrin (30) le long d'un diamètre commun de ce dernier.

5. Appareil selon la revendication 1, dans lequel ledit moyen actionneur (45, 54) est un moteur à fluide (45, 54) comportant un vérin (44, 52) pourvu d'une tige extensible axialement (42, 50).

6. Appareil selon la revendication 4, comprenant un élément de montage (40, 48) et un support (38, 46) qui sont suspendus à ladite tige (42, 50), et dans lequel ledit moyen (110) pour déplacer ladite lame (140) est porté par ledit support (38, 46), ledit moyen (110) comprenant un moteur à fluide (110) possédant un vérin (115) pourvu d'une tige extensible axialement (114), une coulisse (142) montée parallèlement à ladite tige (114) et un support de palier (132) relié à ladite tige (115) et à ladite coulisse (142).

7. Appareil selon la revendication 6, dans lequel ladite roulette (162) de ladite molette est montée sur ledit support (38, 46), et ledit moteur à fluide (45, 54) amène ladite roulette (162) en contact de molettage avec le bord coupé de la feuille de matériau (32).

8. Appareil selon la revendication 6, comprenant des cales d'épaisseur (82, 94) disposées entre le support (38, 46) et ledit élément de montage (40, 48), et étant d'une construction appropriée pour positionner un tranchant de coupe (145) de la lame (140) dans un plan de coupe souhaité.

9. Appareil selon la revendication 6, comprenant un taquet (74, 95) saillant vers le bas dudit élément de montage (40, 48) pour pénétrer dans une fente (77, 98) ménagée dans ledit support (38, 46).

10. Mécanisme de formage par dépression pour appliquer une couche d'un matériau élastomère en feuille (32) sur un premier côté d'un mandrin toroidal (30), ledit mécanisme comprenant un réservoir à vide (28) dans lequel est disposé ledit mandrin (30), ledit réservoir (28) et ledit mandrin (30) étant aptes à être déplacés axialement l'un par rapport à l'autre afin de déplacer ledit mandrin (30) depuis une position dans laquelle il est à l'intérieur dudit réservoir (28) jusqu'à une position dans laquelle il est partiellement relié au-dessus de l'extrémité ouverte dudit réservoir (28), un moyen (39) pour fixer ladite feuille de matériau élastomère (32) sur l'extrémité ouverte dudit réservoir (28) lorsque ledit mandrin (30) est dans une position dans laquelle il est à l'intérieur dudit réservoir (28), un moyen pour établir une dépression dans ledit reservoir (28) tandis que ledit mandrin (30) est déplacé dans ladite position dans laquelle il est partiellement relevé au-dessus de l'extrémité ouverte dudit réservoir (28), si bien qu'une partie de ladite feuille de matériau (32) est appliquée sur un premier côté dudit mandrin (30), en combinaison avec:

— un appareil de coupe et de molettage (16, 18, 20, 22) pour couper et moletter ladite partie de ladite feuille de matériau appliquée sur ledit mandrin (30), ledit appareil de coupe et de molettage étant caractérisé par:

— une plaque rotative de support (24),

— au moins deux moyens de coupe (104) supportés par ladite plaque de support (24) comportant une lame rotative (140) entraînée,

— au moins deux moyens de molettage (105) portés par ladite plaque de support (24) comportant une roulette apte à tourner librement (162),

— des moyens actionneurs (45, 54) portés par ladite plaque de support (24), dans lesquels un premier moyen actionneur (45) déplace un premier couteau (104) et une première molette (105), et un moyen actionneur séparé (54) déplace l'autre desdits couteaux (104) et l'autre desdites molettes (105), ledit premier moyen actionneur (45) rapprochant et éloignant lesdits couteaux (104) et lesdites molettes (105) respectivement supportés par rapport à un diamètre extérieur du mandrin (30), ledit second moyen actionneur (54) rapprochant et éloignant lesdits couteaux (104) et lesdites molettes (105) respectivement supportés par rapport à un diamètre intérieur dudit mandrin (30),

— un moyen (26) pour relever et abaisser ladite plaque de support (24) et ledit appareil de coupe et de molettage (16, 18, 20, 22) par rapport audit mandrin (30) et par rapport audit réservoir à vide (28),

— un moyen (110) pour avancer et rétracter la lame rotative (140) entraînée dudit couteau (104) en direction de ladite jonction entre la partie appliquée de la feuille de matériau (32) et le reste de ladite feuille, le plan de ladite lame (140) étant dans une direction parallèle audit mandrin (30), et ladite lame rotative (140) entraînée coupant dans ladite jonction de la feuille de matériau (32) en réponse à l'avancement dudit couteau (104) et à la rotation de ladite plaque de support (24) autour de l'axe dudit mandrin (30);

lesdits moyens actionneurs (45, 54) amenant ladite molette (105) en contact de molettage avec ledit bord séparé de ladite partie appliquée de la feuille de matériau (32) en réponse au retrait dudit couteau (104) et à la rotation de ladite plaque de support (24) destinée à faire tourner ladite molette (105) autour dudit mandrin (30).

11. Mécanisme de formage par dépression selon la revendication 10, dans lequel ledit moyen actionneur (45, 45, 54, 54) comprend quatre moteurs à fluide, chacun desdits moteurs à fluide (45, 45, 54, 54) supportant un desdits couteaux (104) et une desdites molettes (105), les deux premiers desdits moteurs à fluide (45, 45) supportant lesdits couteaux (104) et lesdites molettes (105) pour les avancer ou les reculer par rapport à un diamètre extérieur dudit mandrin (30) le long d'un diamètre commun dudit mandrin (30), les deux autres moteurs à fluide (54, 54) supportant lesdits couteaux (104) et lesdites molettes (105) pour les avancer ou les reculer par rapport à un diamètre intérieur dudit mandrin (30) le long d'un diamètre commun dudit mandrin (30).

FIG. 1

FIG. 2

FIG. 3A

FIG. 3B

FIG. 5

FIG. 6

FIG. 4

FIG. 7A

FIG. 7B

FIG. 8

3

FIG. 9

FIG. 10

FIG. 11

FIG. 12